# EUROPÄISCHE PATENTSCHRIFT

(11) **EP 3 109 223 B1**
(45) Veröffentlichungstag und Bekanntmachung des Hinweises auf die Patenterteilung: **08.08.2018**
(21) Anmeldenummer: 15173134.6
(22) Anmeldetag: 22.06.2015
(51) Int. Cl.: C05G 3/08

(54) **MISCHUNG ZUR BEHANDLUNG VON HARNSTOFFHALTIGEN DÜNGEMITTELN**
COMPOUND FOR THE TREATMENT OF UREA-COMPRISING FERTILIZERS
MÉLANGE DESTINÉ AU TRAITEMENT D'ENGRAIS CONTENANT DE L'URÉE

(43) Veröffentlichungstag der Anmeldung: 28.12.2016
(73) Patentinhaber: EuroChem Agro GmbH, 68165 Mannheim (DE)
(72) Erfinder: Peters, Nils, 67227 Frankenthal (DE); Mannheim, Thomas, 74547 Untermünkheim (DE)
(74) Vertreter: Féaux de Lacroix, Stefan

(56) Entgegenhaltungen:
- WO-A1-2011/032904
- WO-A2-2013/121384
- WO-A2-2015/086823
- DE-A1-102007 062 614

## Beschreibung

Die Erfindung betrifft eine synergistische Mischung aus Urease-Inhibitor und Nitrifikationsinhibitor zur Behandlung von harnstoffhaltigen Düngemitteln, insbesondere mit verbesserter Urease-hemmender Wirkung, deren Verwendung sowie harnstoffhaltige Düngemittel, die diese Mischung enthalten.

Weltweit wird die überwiegende und weiter steigende Menge des für die Düngung verwendeten Stickstoffs in Form von Harnstoff bzw. harnstoffhaltigen Düngemitteln eingesetzt. Harnstoff selbst ist jedoch eine nicht oder kaum aufgenommene Stickstoffform, da er relativ rasch durch das im Boden ubiquitär vorhandene Enzym Urease zu Ammoniak und Kohlendioxid hydrolisiert wird. Dabei wird unter Umständen gasförmiges Ammoniak an die Atmosphäre abgegeben, welches dann nicht mehr im Boden für die Pflanzen zur Verfügung steht, wodurch die Effizienz der Düngung reduziert wird.

Es ist bekannt, dass man die Stickstoffausnutzung beim Einsatz harnstoffhaltiger Düngemittel verbessern kann, indem man harnstoffhaltige Düngemittel zusammen mit Substanzen ausbringt, welche die enzymatische Harnstoffspaltung verringern oder inhibieren können (für einen allgemeinen Überblick siehe Kiss, S. Simihäian, M. (2002) Improving Efficiency of Urea Fertilizers by Inhibition of Soil Urease Activity, ISBN 1-4020-0493-1, Kluwer Academic Publishers, Dordrecht, The Netherlands). Zu den potentesten bekannten Urease-Inhibitoren gehören N-Alkylthiophosphorsäuretriamide und N-Alkylphosphorsäuretriamide, welche beispielsweise in EP 0 119 487 beschrieben sind.

Auch Gemische von N-Alkylthiophosphorsäuretriamiden wie N-(n-Butyl)thiophosphorsäuretriamid (NBPT) und N-(n-Propyl)thiophosphorsäuretriamid (NPPT) sind einsetzbar.

Diese Urease-Inhibitoren sind beispielsweise in der US 4,530,714 und WO 2009/079994 beschrieben. Damit diese Verbindungsklasse als Urease-Hemmstoff wirken kann, muss zunächst eine Umwandlung in die entsprechende Oxoform stattfinden. Anschließend reagiert diese mit der Urease und bewirkt deren Hemmung.

Es empfiehlt sich, die Urease-Hemmstoffe zusammen mit dem Harnstoff auf bzw. in den Boden zu geben, da auf diese Weise sichergestellt wird, dass der Hemmstoff zusammen mit dem Dünger mit dem Boden in Kontakt kommt. Der Wirkstoff kann dabei im Harnstoff inkorporiert sein, beispielsweise, indem er vor der Harnstoff-Granulierung oder der Prillung in die Schmelze eingelöst wird. Ein derartiges Verfahren ist beispielsweise in der US 5,352,265 beschrieben. Eine weitere Möglichkeit besteht darin, den Wirkstoff auf das Harnstoff-Granulat bzw. die Prills aufzutragen, beispielsweise in Form einer Lösung.

Entsprechende Verfahren zur Aufbringung und geeignete Lösungsmittel sind beispielsweise in der EP-A-1 820 788 beschrieben.
In der DE-A-10 2005 015 362 sind Umsetzungsprodukte aus NBPT und Pyrazolen beschrieben. In WO2013/121384 ist eine Mischung zur Reduktion der Emissionen van Lachgas und Ammoniak aus der Boden enthaltend nBTPT und/oder nPTPT, 2-(3,4-dimethyl-pyrazol)-bernsteinsäure, Stobilurinderivate, Harnstoff und N-methylpyrrolidon beschrieben. Aufgabe der vorliegenden Erfindung ist die Bereitstellung einer Mischung zur Behandlung von harnstoffhaltigen Düngemitteln, die eine synergistische Kombination von Urease-Hemmung und Nitrifikationsinhibierung erlaubt.

In der Mischung soll die üblicherweise auftretende zusätzliche Ammoniakemission durch einen enthaltenen Nitrifikationsinhibitor unterbunden werden.
Im Vergleich zu separat eingesetzten Urease-Inhibitoren und Nitrifikationsinhibitoren soll ein vergleichbarer Effekt mit geringeren Aufwandmengen erreicht werden. Stickstoffverluste des harnstoffhaltigen Düngemittels bei der Anwendung sollen durch die erfindungsgemäße Mischung vermieden werden.
Aufgabe der vorliegenden Erfindung ist ferner die Bereitstellung einer Mischung zur Behandlung von harnstoffhaltigen Düngemitteln, insbesondere zur Urease-Hemmung, die nach Aufbringen auf harnstoffhaltige Düngemittel über einen längeren Zeitraum lagerstabil ist, das Durchlaufen verschiedener Distributionsstufen besser überstehen lässt und den auf Harnstoff aufgebrachten Wirkstoff vor einer Zersetzung oder einem Verlust schützt. Die Mischung soll die Aktivität des Wirkstoffs nicht negativ beeinflussen.
Die Aufgabe wird erfindungsgemäß gelöst durch eine Mischung zur Behandlung von harnstoffhaltigen Düngemitteln, enthaltend
a) mindestens ein (Thio)phosphorsäuretriamid der allgemeinen Formel (I) und/oder (Thio)phosphorsäurediamid der allgemeinen Formel (II)

   R¹R²N-P(X)(NH₂)₂ (I)

   R¹O-P(X)(NH₂)₂ (II)

   mit der Bedeutung
   - X: Sauerstoff oder Schwefel,
   - R¹ und R²: unabhängig voneinander Wasserstoff, jeweils substituiertes oder unsubstituiertes 2-Nitrophenyl, C₁₋₁₀-Alkyl, C₃₋₁₀-Cycloalkyl, C₃₋₁₀-Heterocycloalkyl, C₆₋₁₀-Aryl, C₆₋₁₀-Heteroaryl oder Diaminocarbonyl, wobei R¹ und R² zusammen mit dem sie verbindenden Stickstoffatom auch einen 5- oder 6-gliedrigen gesättigten oder ungesättigten heterocyclischen Rest bilden können, der gegebenenfalls auch ein oder zwei weitere Heteroatome, ausgewählt aus der Gruppe, bestehend aus Stickstoff, Sauerstoff und Schwefel, enthalten kann, als Komponente A,
b) 2-(N-3,4-Dimethylpyrazol)-bernsteinsäure, die auch als Salz vorliegen kann, als Komponente B, wobei Komponenten A und B in einem Gewichtsverhältnis im Bereich von 1:1 bis 1:6 vorliegen.
Die Erfindung betrifft zudem die Verwendung der Mischung als Additiv und Beschichtungsmittel für harnstoffhaltige Stickstoffdüngemittel.

Die Erfindung betrifft ferner die Verwendung der Mischung zur Verminderung der Stickstoffverluste bei organischen Düngern, auf Weideflächen oder während der Güllelagerung und zur Absenkung der Ammoniaklast in Tierställen.
Die Erfindung betrifft ferner ein harnstoffhaltiges Düngemittel, enthaltend die erfindungsgemäße Mischung in einer solchen Menge, dass der Gesamtgehalt der Komponenten A und B, bezogen auf den enthaltenen Harnstoff, 0,001 bis 0,5 Gew.-%, vorzugsweise 0,02 bis 0,4 Gew.-%, insbesondere 0,08 bis 0,25 Gew.-% beträgt.
Es wurde erfindungsgemäß gefunden, dass 2-(N-3,4-Dimethylpyrazol)-bernsteinsäure (auch als DMPSA oder DMPBS bezeichnet) in Mischung mit (Thio)phosphorsäuretriamiden der allgemeinen Formel (I) und/oder (Thio)phosphorsäurediamiden der allgemeinen Formel (II) synergistisch wirksame Gemische zur Behandlung harnstoffhaltiger Düngemittel ergibt.

Die jeweils üblichen Einsatzmengen an Urease-Inhibitor (Komponente A) und Nitrifikationsinhibitor (Komponente B) konnten erfindungsgemäß ohne nennenswerten Wirksamkeitsverlust deutlich vermindert werden, so dass die Gesamtmenge an Wirkstoff in der Mischung nur etwa halb so groß ist wie bei einer Anwendung der Einzelsubstanzen.

Wie vorstehend angegeben, hydrolysiert das Enzym Urease Harnstoff relativ rasch zu Ammoniak und Kohlendioxid. Durch Einsatz von Urease-Inhibitoren kann dieser Vorgang verzögert bzw. verlangsamt werden.

Nitrifikationsinhibitoren verhindern die vorzeitige Umwandlung von Stickstoff in Düngemitteln in Nitrat, das beispielsweise von Regenwasser einfach ausgewaschen werden kann und damit den Pflanzen verlorengeht.

Typische Nitrifikationsinhibitoren wie 3,4-Dimethylpyrazol oder 3,4-Dimethylpyrazolphosphat erhöhen typischerweise die Ammoniak-Emissionen aus harnstoffhaltigen Düngemitteln signifikant, unter anderem, da der pH-Wert nach der Hydrolyse länger im basischen Bereich verbleibt. Bei den erhöhten pH-Werten ist ein deutlich höheres Ammoniak-Emissionspotential gegeben als bei niedrigeren pH-Werten. Die Bildung von N₂O und die Nitratauswaschung sinken zwar durch Einsatz eines Nitrifikationsinhibitors, diese erwünschte Wirkung wird jedoch mit erhöhten Ammoniak-Emissionen und damit Verlust von Stickstoff über Ammoniak erkauft.

Daher wird zwar häufig ein Urease-Inhibitor auf harnstoffhaltigen Düngemitteln eingesetzt, nicht jedoch ein Nitrifikationsinhibitor.

Es wurde nun erfindungsgemäß gefunden, dass (Thio)phosphorsäuretriamide der allgemeinen Formel (I) bzw. (Thio)phosphorsäurediamide der allgemeinen Formel (II), insbesondere N-(n-Butyl)-thiophosphorsäuretriamid (NBPT) oder N-(n-Propyl)thiophosphorsäuretriamid (NPPT), die Ammoniak-Emission aus Harnstoff und die zusätzlichen Ammoniakemissionen bei Mitverwendung von 2-(N-3,4-Dimethylpyrazol)-bernsteinsäure als Nitrifikationsinhibitor unterbinden oder begrenzen. Damit wird nicht nur die Nitrifikation durch den eingesetzten Nitrifikationsinhibitor ausreichend gehemmt und Lachgasverluste werden stark reduziert, sondern auch die Ammoniakverluste werden stark vermindert, so dass der Harnstoff länger stabilisiert wird.

Dieser Effekt tritt speziell beim Einsatz des erfindungsgemäßen Nitrifikationsinhibitors in Kombination mit den erfindungsgemäßen Urease-Inhibitoren auf. Die Nitrifikationsinhibierung und die Urease-Inhibierung bleiben dabei nebeneinander bestehen bei verminderter Einsatzmenge beider Wirkstoffe.

Ohne an eine Theorie gebunden zu sein, kann der Kombinationseffekt auf der verzögerten Wirkung des Nitrifikationsinhibitors gekoppelt mit der verzögerten Freisetzung des Ammonium-Stickstoffs basieren. 2-(N-3,4-Dimethylpyrazol)-bernsteinsäure ist wasserlöslich und polarer als andere Nitrifikationsinhibitoren. Für einen Wirkungseintritt muss typischerweise im Erdreich zunächst die kovalente Bindung zur Bernsteinsäure gelöst werden. Der Wirkungseintritt fällt mit der verzögerten Ammonium-Stickstofffreisetzung zusammen, so dass die nitrifikationsinhibierende Wirkung und die Urease-inhibierende Wirkung zeitlich ineinandergreifend erhalten bleiben und sich gegenseitig verstärken.

Der zusätzliche Einsatz einer Aminverbindung als Komponente C, wie er in der WO 2009/079994 gelehrt wird, kann erfindungsgemäß entfallen, so dass diese Komponente eingespart werden kann. Es ist erfindungsgemäß dennoch möglich, die Aminverbindung der Komponente C mitzuverwenden. Ohne an eine Theorie gebunden zu sein, kann durch den Nitrifikationsinhibitor, der leicht basisch und polar ist, auf den Einsatz dieser basischen, polaren Komponente verzichtet werden.

Screening-Versuche mit DMPSA und NBPT ergaben, dass der Urease-Inhibitor in den ersten Tagen der Anwendung die Harnstoffhydrolyse in ausreichender Weise hemmt, ohne dass der Nitrifikationsinhibitor hierauf einen schädlichen Einfluss hat.

Eine um bis zu 70 % verminderte Menge (gegenüber einer Anwendung, bei der der Nitrifikationsinhibitor das alleinige Additiv ist) an Nitrifikationsinhibitor reicht aus, um die Nitrifikation im gesamten Anwendungszeitraum zu hemmen. Der Einsatz des Urease-Inhibitors verlangsamt die Freisetzung von Ammonium in den ersten Tagen nach der Anwendung.

Während bei alleiniger Verwendung bereits ein Drittel der üblichen Nitrifikationsinhibitormenge die Ammoniak-Emissionen stark ansteigen lässt, ist es bei der Kombination mit NBPT nicht der Fall. Andererseits senkt bereits ein Drittel der üblichen Anwendungsmenge an Nitrifikationsinhibitor die Lachgasemissionen drastisch.

Im Ergebnis bleiben bei der gemeinsamen Anwendung des Nitrifikationsinhibitors DMPSA mit dem Urease-Inhibitor NBPT die Wirkungen der beiden Inhibitoren erhalten und verstärken sich gegenseitig so, dass die gesamte Einsatzmenge beider Wirkstoffe mehr als halbiert werden kann.

Gegenüber der üblichen Einsatzmenge der Einzelsubstanzen bei alleiniger Verwendung kann für DMPSA die Menge um bis zu 2/3 vermindert werden (z. B. von 0,36 Gew.-% auf 0,12 Gew.-%), bei NBPT um bis zu 1/3 (z. B. von 0,06 Gew.-% auf 0,04 Gew.-%, jeweils bezogen auf Harnstoff. Da üblicherweise DMPSA in wesentlich größerer Menge eingesetzt wird als NBPT, fällt die starke Verminderung seiner Menge umso stärker ins Gewicht.

Als Komponente A wird mindestens ein (Thio)phosphorsäuretriamid der allgemeinen Formel (I) und/oder ein (Thio)phosphorsäurediamid der allgemeinen Formel (II) eingesetzt. Dabei kann es sich um Einzelverbindungen wie auch um Mischungen von zwei oder mehr derartigen Verbindungen handeln. Beispielsweise kann es sich um Mischungen handeln, wie sie in der EP-A-1 820 788 beschrieben sind.

Die Reste R¹ und R² können jeweils unsubstituiert oder substituiert sein, z. B. durch Halogen und/oder Nitro.

Beispiele für Alkylgruppen sind Methyl, Ethyl, Propyl, Isopropyl, n-Butyl, Isobutyl, sec-Butyl, tert-Butyl, Pentyl, Isopentyl, Neopentyl, tert-Pentyl, Hexyl, 2-Methylpentyl, Heptyl, Octyl, 2-Ethylhexyl, Isooctyl, Nonyl, Isononyl, Decyl und Isodecyl. Cycloal-kylgruppen sind z. B. Cyclopropyl, Cyclobutyl, Cyclopentyl, Cyclohexyl und Cyclooctyl, Arylgruppen sind z. B. Phenyl oder Naphthyl bzw. substituiert 2-Nitrophenyl. Beispiele für heterocyclische Reste R₁R₂N- sind Piperazinyl-, Morpholinyl-, Pyrrolyl-, Pyrazolyl-, Triazolyl-, Oxazolyl-, Thiazolyl- oder Imidazolylgruppen.

Solche Verbindungen sind beispielsweise aus EP 0 119 487, WO 00/58317 und EP 1 183 220 als Urease-Inhibitoren bekannt.

Ein Beispiel für Verbindungen der Formel (II) ist Phenylphosphordiamidat.

Bevorzugt sind Zubereitungen, welche N-n-Butylthiophosphorsäuretriamid (NBPT) als einen oder einzigen der Wirkstoffe (Komponente A) enthalten. Wird ein weiterer Wirkstoff mitverwendet, so handelt es sich vorzugsweise um ein Derivat, ausgewählt aus der Gruppe, bestehend aus N-Cyclohexyl-, N-Pentyl-, N-iso-Butyl und N-Propylphosphorsäuretriamid und entsprechenden Thiophosphorsäuretriamiden. Besonders bevorzugt sind solche Zubereitungen, welche NBPT in Mengen von 40 bis 95 Gew.-%, ganz besonders bevorzugt von 60 bis 80 Gew.-% enthalten, jeweils bezogen auf die gesamte Wirkstoffmenge der Komponente A.

Besonders bevorzugt wird nur NBPT als Komponente A eingesetzt.

Thiophosphorsäuretriamide werden bekanntermaßen relativ leicht zu den entsprechenden Phosphorsäuretriamiden umgesetzt. Da Feuchtigkeit in der Regel nicht vollständig ausgeschlossen werden kann, liegen Thiophosphorsäuretriamid und das korrespondierende Phosphorsäuretriamid häufig im Gemisch miteinander vor. Der Begriff "(Thio)phosphorsäuretriamid" bezeichnet daher in dieser Schrift sowohl die reinen Thiophosphorsäuretriamide bzw. Phosphorsäuretriamide als auch deren Gemische.

Besonders, bevorzugt sind N-Alkylthiophosphorsäuretriamide (mit X = S und R2 = H) und N-Alkylphosphorsäuretriamide (mit X = O und R2 = H).

Die Herstellung solcher Urease-Inhibitoren kann z. B. nach bekannten Methoden aus Thiophosphorylchlorid, primären oder sekundären Aminen und Ammoniak erfolgen, wie sei beispielsweise in US 5,770,771 beschrieben sind. Hierbei bringt man in einem ersten Schritt Thiophosphorylchlorid mit einem Äquivalent eines primären oder sekundären Amins in Gegenwart einer Base zur Reaktion und setzt das Produkt anschließend mit einem Überschuss Ammoniak zum Endprodukt um.

Weitere geeignete Urease-Inhibitoren sind beispielsweise in WO 00/61522, WO 00/58317, WO 02/083697, WO 01/87898, WO 2006/010389 beschrieben. Bei den dort beschriebenen Verbindungen handelt es sich beispielsweise um Thiophosphorsäuretriamide, heterocyclisch substituierte (Thio)phosphorsäuretriamide, N-(2- Pyrimidinyl)(thio)phosphorsäuretriamide und N-Phenylphosphorsäuretriamide.

In der EP-A-1 820 788 werden insbesondere Gemische aus N-(nButyl)thiophosphorsäuretriamid und N-(n-Propyl)thiophosphorsäuretriamid beschrieben.

Diese Gemische können erfindungsgemäß neben den Einzelsubstanzen besonders bevorzugt eingesetzt werden.

Die (Thio)phosphorsäuretriamide der allgemeinen Formel (I), bzw. (Thio)phosphorsäurediamide der allgemeinen Formel (II), die als Komponente A eingesetzt werden, können Reinstoffe sein oder Gemische von zweien oder mehreren Reinstoffen. Sie können auch synthesebedingt noch Nebenprodukte aus der Wirkstoffsynthese enthalten. In der Regel liegt die Komponente A in einer Reinheit von mindestens 70 % vor.

Als Komponente B enthält die erfindungsgemäße Mischung 2-(N-3,4-Dimethylpyrazol)bernsteinsäure (DMPBS) als Pyrazolverbindung mit nitrifikationsinhibierender Wirkung. Diese Verbindung ist aus dem Stand der Technik bekannt und beispielsweise in WO 96/24566, WO 2011/032904 und WO 2013/121384 beschrieben.

2-(N-3,4-Dimethylpyrazol)-bernsteinsäure ist häufig ein Isomerengemisch von 2-(3,4-Dimethyl-1H-pyrazol-1-yl)-bernsteinsäure und 2-(2,3-Dimethyl-1H-pyrazol-1-yl)-bernsteinsäure, im Verhältnis von vorzugsweise etwa 80 : 20. Auch eine der Einzelverbindungen kann eingesetzt werden. Es ist auch möglich, Salze dieser Verbindung(en) einzusetzen, beispielsweise Alkalisalze, Erdalkalisalze oder Ammoniumsalze, bevorzugt Alkalisalze.

Die Herstellung von 2-(N-3,4-Dimethylpyrazol)bernsteinsäure kann durch beliebige geeignete Verfahren erfolgen, die beispielsweise in allgemeiner Form in WO 96/24566 beschrieben sind. Vorzugsweise erfolgt die Herstellung durch Umsetzung von 3,4-Dimethylpyrazol mit Maleinsäure oder Maleinsäureanhydrid. Diese Umsetzung wird typischerweise in saurer Umgebung durchgeführt. Zur Herstellung von 3,4-Dimethylpyrazol kann auf Noyce et al., Jour. of Org. Chem. 20, 1955, Seiten 1681 bis 1682 verwiesen werden. Ferner kann auf EP-A-0 474 037, DE-A-3 840 342 und EP-A-0 467 707 verwiesen werden, wie auch auf EP-B-1 120 388.

Für die Reinigung des 3,4-Dimethylpyrazols kann auf DE-A-10 2009 060 150 verwiesen werden.

Günstigerweise nimmt man die Reaktion bei Temperaturen von 0 bis 150°C, vorzugsweise 50 bis 120°C, insbesondere 70 bis 105°C unter Normaldruck in Abwesenheit eines Lösungsmittels oder bevorzugt in einem inerten Lösungsmittel, wie Wasser, Acetonitril oder Dimethylsulfoxid vor. Weitere geeignete Lösungsmittel sind Alkohole, Ether, Ketone, Wasser sowie Alkane. Es kann sich auch die Umsetzung in einer organischen Säure wie Essigsäure anbieten. Das Produkt kann durch Umkristallisieren aufgereinigt werden, beispielsweise durch Aufnehmen durch Diethylether.

Es kann Maleinsäureanhydrid in Wasser gelöst und zur Maleinsäure umgesetzt werden. Dann kann eine wässrige Lösung von 3,4-Dimethylpyrazol zugesetzt werden. Die Umsetzung kann z. B. bei Temperaturen um 100°C erfolgen, z. B. bei 70 bis 105°C. Da 3,4-Dimethylpyrazol unter den Reaktionsbedingungen, in denen die Reaktion üblicherweise durchgeführt wird, tautomerisiert bzw. durch die Substitution am Stickstoff die 3,5-Tautomerie des Pyrazolrings aufgehoben ist, lässt es sich im Allgemeinen nicht vermeiden, Isomerengemische der erhaltenen substituierten Bernsteinsäure vorliegen zu haben, die Strukturisomere aufweisen.

Besonders bevorzugt erfolgt die Herstellung der 2-(N-3,4-dimethylpyrazol)bernsteinsäure durch Umsetzung von 3,4-Dimethylpyrazol mit Maleinsäure, Maleinsäureanhydrid oder Maleinsäure/Maleinsäureanhydrid-Gemischen in Abwesenheit organischer Lösungs- oder Verdünnungsmittel und nachfolgende Kristallisation aus dem so erhaltenen Umsetzungsprodukt in Abwesenheit organischer Lösungs- oder Verdünnungsmittel.

Es wurde erfindungsgemäß gefunden, dass das Produkt in hoher Ausbeute und Reinheit erhalten wird, wenn auf die Mitverwendung organischer Lösungs- oder Verdünnungsmittel bei der Herstellung und Kristallisation verzichtet wird.

Das Vorliegen geringer Mengen organischer Lösungs- oder Verdünnungsmittel bei der Umsetzung oder Kristallisation kann dabei toleriert werden. Erfindungsgemäß können bis zu 10 Gew.-%, besonders bevorzugt bis zu 5 Gew.-%, insbesondere bis zu 2,5 Gew.-% an organischen Lösungs- oder Verdünnungsmitteln, bezogen auf im Verfahren eingesetzte nicht-organische Lösungs- oder Verdünnungsmittel, toleriert werden. Besonders bevorzugt wird vollständig auf organische Lösungs- oder Verdünnungsmittel bei der Umsetzung und Kristallisation verzichtet.

Bevorzugt wird die Umsetzung in Wasser als Lösungsmittel durchgeführt, und die Kristallisation erfolgt aus dem wässrigen Umsetzungsprodukt.

Dabei können wässrige Lösungen oder Pasten von 3,4-Dimethylpyrazol und/oder Maleinsäure und/oder Maleinsäureanhydrid umgesetzt werden. Besonders bevorzugt werden sowohl 3,4-Dimethylpyrazol als auch Maleinsäure(anhydrid) als wässrige Lösungen oder Pasten eingesetzt.

Die Kristallisation erfolgt vorzugsweise durch Abkühlen des wässrigen Umsetzungsproduktes. Dabei können Impfkristalle mitverwendet werden, um die Kristallisation einzuleiten.

Die nach der Kristallisation erhaltene 2-(N-3,4-dimethylpyrazol)bernsteinsäure weist vorzugsweise eine Reinheit von mindestens 99,7%, besonders bevorzugt von mindestens 99,9% auf. Dabei wird diese Reinheit vorzugsweise bereits nach der ersten Kristallisation erreicht.

Durch Verwendung des Umsetzungsprodukts von 3,4-Dimethylpyrazol mit Maleinsäure kann die Flüchtigkeit des 3,4-Dimethylpyrazols stark herabgesetzt werden.

Neben den Komponenten A und B kann die Komponente C optional mitverwendet werden. Vorzugsweise wird jedoch auf die Verwendung der Komponente C verzichtet. Der Gewichtsverhältnis der Komponente A und B liegt im Bereich von 1:1 bis 1:6. Vorzugsweise liegt Komponente A zur Komponente B im Gewichtsverhältnis von 1 : 1,5 bis 1 : 5, insbesondere 1 : 2 bis 1 : 4,5, speziell 1 : 2,5 bis 1 : 4 vor.
Es ist erfindungsgemäß nicht notwendig, die Komponente B mit der Komponente A chemisch umzusetzen, wie es beispielsweise in DE-A-10 2006 015 362 beschrieben ist. Hierdurch lassen sich die Mengen der Komponenten A und B in wesentlich breiterem Umfang variieren und auf das jeweilige Anwendungsgebiet abstimmen.

Alternativ ist es jedoch auch möglich, ein Umsetzungsprodukt aus 2-(N-3,4-Dimethylpyrazol)bernsteinsäure und Phosphorsäuretriamid oder Thiophosphorsäuretriamid einzusetzen.
Die Erfindung betrifft auch ein entsprechendes Umsetzungsprodukt. Dabei können beispielsweise eine oder mehrere der freien Säuregruppen der Bernsteinsäure mit Amidgruppen im Phosphortriamid oder Thiophosphorsäuretriamid reagieren. Durch die Umsetzung werden 2-(N-3,4-Dimethylpyrazol)bernsteinsäure und Phosphortriamid oder Thiophosphorsäuretriamid kovalent miteinander verbunden. Bevorzugt ist jedoch der getrennte Einsatz der Komponenten A und B.

Es wurde erfindungsgemäß gefunden, dass die Kombination von 2-(N-3,4-Dimethylpyrazol)bernsteinsäure mit Komponente A in harnstoffhaltigen Düngemitteln zu einem wirksamen Nitrifikationsinhibitor führt, der neben den vorstehend genannten Vorteilen bei der Lagerung und auch nach der Ausbringung auf den Boden eine verminderte Flüchtigkeit bzw. einen verminderten Verlust aufweist.
Ferner wurde 2-(N-3,4-Dimethylpyrazol)bernsteinsäure als besonders wirksamer Nitrifikationsinhibitor mit geringer Flüchtigkeit und geringer Toxizität aufgefunden. Daher betrifft die vorliegende Erfindung die spezielle Kombination von 2-(N-3,4-Dimethylpyrazol)bernsteinsäure mit Komponente A.
Es hat sich bewährt, Mischungen von Komponente A, insbesondere NBPT, und 2-(N-3,4-Dimethylpyrazol)bernsteinsäure mit einem harnstoffhaltigen Düngemittel einzusetzen. Solche Düngemittelmischungen enthalten bevorzugt 100 bis 3000 Gew.-ppm, bezogen auf den Harnstoff im Düngemittel, an Nitrifikationsinhibitor (0,01 bis 0,3 Gew.-%), besonders bevorzugt 0,03 bis 0,2 Gew.-% DMPSA, insbesondere 0,04 bis 0,18 Gew.-% DMPSA.
Die harnstoffhaltigen Düngemittelmischungen enthalten bevorzugt 100 bis 800 Gew.-% ppm, bezogen auf das Düngemittel, an Komponente A (0,01 bis 0,08 Gew.-%), besonders bevorzugt 0,01 bis 0,07 Gew.-%, insbesondere 0,018 bis 0,06 Gew.-% der Komponente A, insbesondere NBPT.

Komponenten A und B liegen im Düngemittel in einem Gewichtsverhältnis im Bereich von 1 : 1 bis 1 : 6, bevorzugt 1 : 1,5 bis 1 : 5, insbesondere 1 : 2 bis 1 : 4,5, speziell 1 : 2,5 bis 1 : 4 vor.
Besonders bewährt haben sich wegen ihrer guten Langzeitwirkung Düngemittelmischungen, die nach folgender Methode hergestellt werden:
Granulate von Düngemitteln werden mit 2-(N-3,4-Dimethylpyrazol)bernsteinsäure imprägniert oder beschichtet, indem man sie mit einer Lösung des Nitrifikationsinhibitors besprüht und wieder trocknet. Die Methode ist beispielsweise aus DE-A-41 28 828 bekannt, auf die hier in vollem Umfang Bezug genommen wird. Die dort zusätzlich vorgeschlagene Versiegelung des imprägnierten Granulats mit einem Paraffinwachs erübrigt sich im Allgemeinen aufgrund der wesentlich geringeren Flüchtigkeit des erfindungsgemäßen Nitrifikationsinhibitors.
Die 2-(N-3,4-Dimethylpyrazol)bernsteinsäure kann auch bereits bei der Herstellung des Düngemittels zugesetzt werden, z. B. in der Maische.
Falls notwendig, kann auch eine Behandlung des Mineraldüngemittels mit Polysäuren erfolgen, wie sie in WO 98/05607/EP-B-0 971 526 beschrieben ist.
Üblicherweise werden die Nitrifikationsinhibitoren in Mengen von 100 g/ha bis 10 kg/ha auf den Boden aufgebracht. Erfindungsgemäß kann diese Menge auf 30 g/ha bis 3 kg/ha vermindert werden.
Das Ausbringen in flüssigen Düngemittelformulierungen kann z. B. durch Fertigation mit oder ohne Überschusswasser erfolgen, wie in DE-C-102 30 593 beschrieben.
Das auf einfache Weise aus preisgünstigen Ausgangsprodukten herstellbare 2-(N-3,4-Dimethylpyrazol)bernsteinsäure zeichnet sich bei der Verwendung als Nitrifikationsinhibitor vor allem dadurch aus, dass es die Nitrifikation von Ammonium-Stickstoff im Boden über einen langen Zeitraum hinweg wirksam hemmt.

Hinzu kommt, dass diese Verbindung über günstige toxikologische Eigenschaften verfügt, einen niedrigen Dampfdruck aufweist und im Boden gut sorbiert wird. Dies hat zur Folge, dass 2-(N-3,4-Dimethylpyrazol)bernsteinsäure weder in nennenswertem Umfang durch Sublimation in die Atmosphäre abgegeben noch durch Wasser leicht ausgewaschen wird. Hierdurch ergeben sich zum einen ökonomische Vorteile wie eine hohe Wirtschaftlichkeit aufgrund der länger anhaltenden Wirkung des Nitrifikationsinhibitors und zum anderen ökologische Vorteile wie eine Verringerung der Belastung von Luft (Klimagas-reduzierend) und Oberflächengewässern und Grundwasser. Im Boden diffundiert 2-(N-3,4-Dimethylpyrazol)bernsteinsäure ähnlich schnell wie Nitrat bzw. Ammonium und kann daher optimal wirken.
Zusätzlich zu Komponenten A und B kann fakultativ die Komponente C mitverwendet werden.

Die Komponente C enthält mindestens eine Aminogruppe oder eine substituierte Aminogruppe enthaltende Verbindung mit einem Siedepunkt von mehr als 100°C. Die Aminogruppe sind z. B. primäre, sekundäre oder tertiäre Aminogruppe, wobei beliebige weitere funktionelle Gruppen und Reste, wie z. B. Hydroxy-, Halogen-, Carboxy-, Carbamoyl-, Carbonyl-, Oxyalkyl-, Mercapto-, M-sulfido-, Sulfoxy-, Sulfo-, Phospho-, Siloxy-, Amino-, Amido-, Imino-, Imido-, Oxyamidogruppen etc. in der Verbindung vorliegen können. Nachstehend wird Komponente C beispielhaft als Amin näher erläutert. Die Ausführungen gelten auch allgemein für die Komponente C.
Der Wirkstoff der Komponente A weist nur eine begrenzte Lagerstabilität auf. Die Lagerstabilität ist umso geringer, je höher die Temperatur ist. Wenn beispielsweise Harnstoff unter tropischen Bedingungen gelagert wird, sind in der Regel nach etwa vier Wochen Lagerung mehr als 60 % des Wirkstoffs zersetzt. Für die Vermarktung des mit dem Wirkstoff stabilisierten Harnstoffs ist es jedoch vielfach unerlässlich, den Wirkstoff auf Harnstoff aufzubringen und das behandelte Düngemittel bis zur Ausbringung zu lagern.
Es wurde erfindungsgemäß gefunden, dass der auf Harnstoff aufgebrachte Wirkstoff der Komponente A oft eine deutlich höhere Lagerstabilität aufweist (mindestens 2-3 Monate), wenn er in Kombination mit mindestens einem Amin mit einem Siedepunkt von mehr als 100°C als Komponente C eingesetzt wird. Das Amin der Komponente C weist dabei vorzugsweise einen Siedepunkt von mehr als 150°C, besonders bevorzugt von mehr als 200°C bei Umgebungsdruck (1 bar) auf. Es kann sich dabei um primäre, sekundäre oder tertiäre Amine oder Polyamine handeln, die mehrere dieser Aminogruppen tragen. Bevorzugt werden als Amine sekundäre und/oder tertiäre Amine eingesetzt. Besonders bevorzugt werden tertiäre Amine eingesetzt, die auch in polymerer Form vorliegen können. Bevorzugt werden solche Amine eingesetzt, die keine chemische Reaktion mit dem Wirkstoff der Komponente A oder einem gegebenenfalls mitverwendeten Lösungsmittel der Komponente C eingehen. Beispielsweise sind die Amine der Komponente C ausgewählt aus Methyldiethanolamin, Tetrahydroxypropylethylendiamin, Trimethylaminoethylethanolamin, N,N,N',N'-Tetramethyl-1,6-hexandiamin, N,N',N"-Tris(dimethylaminopropyl)hexahydrotriazin, 2,2'-Dimorpholinyldiethylether oder Gemischen davon.

Die Komponente C wird in einer zur Erhöhung der Lagerstabilität des Wirkstoffs der Komponente A auf harnstoffhaltigen Düngemitteln ausreichenden Menge eingesetzt. Bevorzugt sollte Komponente C in mindestens der 0,2-fachen molaren Menge der Komponente A eingesetzt werden, besonders bevorzugt in der 0,5- bis 3-fachen molaren Menge, insbesondere in der 1- bis 2-fachen molaren Menge.

Amine mit einem hohen Siedepunkt sind in der Anwendung auch aus Gründen des Geruchs sowie des Explosionsschutzes vorteilhaft.

Erstaunlicherweise weisen Amide, wie beispielsweise N-Methylpyrrolidon (NMP), keine stabilisierende Wirkung auf.

Der stabilisierende Effekt ist dabei unabhängig von einer Mitverwendung eines Lösungsmittels. Der Aminzusatz zeigt sowohl bei Verwendung von NMP wie auch bei Verwendung von Alkylendiolen wie 1,2-Propandiol als Lösungsmittel eine stabilisierende Wirkung.

Durch Zusatz von polymeren Hilfsstoffen kann darüber hinaus die stabilisierende Wirkung noch weiter verstärkt werden.

Die erfindungsgemäßen Mischungen können nur die Komponenten A, B und vorzugsweise auch C enthalten. Dabei kann beispielsweise Komponente C gegebenenfalls als Lösungsmittel für Komponente A dienen, so dass sich eine flüssige oder leicht schmelzbare Zusammensetzung ergibt. Es können auch feste Gemische der Komponenten A, B und gegebenenfalls C erfindungsgemäß eingesetzt werden, wie auch Gemische in Emulsions- oder Dispersionsform.

Gemäß einer Ausführungsform der Erfindung kann die Mischung weiterhin ein Lösungsmittel für die (Thio)phosphorsäuretriamide als Komponente D enthalten. Dabei können alle geeigneten Lösungsmittel eingesetzt werden. Als Lösungsmittel kommen allgemein solche Verbindungen in Frage, die polar sind und damit ein ausreichendes Lösungsvermögen für die Komponente A aufweisen. Sie sollten vorzugsweise einen ausreichend hohen Siedepunkt aufweisen, so dass bei der Aufbringung nicht mit einem Verdampfen größerer Mengen an Lösungsmitteln zu rechnen ist. Beispiele geeigneter Lösungsmittel sind Alkohole, Amine, Carbonsäurederivate wie Ester, Amide, Harnstoffderivate, halogenierte Verbindungen, substituierte Aromaten und Gemische davon. Geeignete Lösungsmittel sind beispielsweise in EP-A-1 820 788 beschrieben. Geeignete Lösungsmittel können Wasser, Alkohole, Glykole wie auch NMP oder Dimethylphthalat sein. Beispiele geeigneter flüssiger Formulierungen finden sich in WO 07/22568. Dort sind Lösungsmittel auf Basis von Glykolen oder Glykolderivaten beschrieben. Beispiele geeigneter Glykole sind Propylenglykol und Dipropylenglykol. Die Glykole können allgemein als endständige C2-10-Alkylendiole beschrieben werden. Beispiele weiterer Glykole sind Neopentylglykol, Pinakol, 2,2-Diethyl-1 ,3-Propandiol, 2- Ethyl-1 ,3-Hexandiol, 2-Ethyl-2-Butyl-1 ,3-Propandiol, Isobutenglykol, 2,3-Dimethyl-1 ,3- Propandiol, 1 ,3-Diphenyl-1 ,3-Propandiol, 3-Methyl-1 ,3-Butandiol. Beispiele cyclischer Glykole sind 1 ,4-Cyclohexandimethanol und p-Xylylenglykol. Beispiele von Polyglykolen sind Polyethylenglykol und Polypropylenglykole. Geeignete Derivate können Ester wie Stearate oder Caprylate sein. Es können beispielsweise auch Glycerin oder Glycerinester eingesetzt werden. Weitere geeignete zusätzliche Lösungsmittel können flüssige Amide sein, 2-Pyrrolidon und N-Alkyl-2-Pyrrolidone wie NMP. Ein bevorzugtes Lösungsmittel ist Dimethylphthalat. Vorzugsweise wird kein derartiges Lösungsmittel eingesetzt.

Alternativ können auch feste Formulierungen verwendet werden, die außer der Mischung noch Zusatzstoffe wie Füllstoffe, Bindemittel oder Granulierhilfsmittel wie Kalk, Gips, Siliziumdioxid, oder Kaolinit enthalten können. Erfindungsgemäße Mischungen können neben den Komponenten A und B auch gleichzeitig Lösungsmittel oder Lösungsmittelgemische und Zusatzstoffe umfassen, sowie als Suspension vorliegen.

Erfindungsgemäß können als weitere Komponente E Polymere in gelöster oder dispergierter Form in den Mischungen enthalten sein. Dabei sind solche Polymere bevorzugt, die mit den Komponenten A und B keine chemischen Reaktionen eingehen. Die Polymere können in Lösung, Emulsion oder dispergierter Form vorliegen. Bevorzugt werden lösliche Polymere eingesetzt, die bevorzugt ein Zahlenmittel des Molekulargewichts von mindestens 5000 aufweisen. Geeignete Polymere können sich von vinylischen Monomeren herleiten, beispielsweise von Styrolen oder (Meth)acrylaten oder Acrylnitril. Beispielsweise können lösliche Polystyrole, lösliche Polystyrol-AcrylnitrilPolymere oder auch derartige, Pfropfkautschuke enthaltende Polymere, eingesetzt werden. Ferner können beispielsweise Polyester oder Polyalkylenglykole eingesetzt werden. Die Stabilisierung der Urease-Inhibitoren der Komponente A wird durch den Zusatz der Polymere nochmals verbessert. Sie können auch zur verzögerten Freisetzung der Mischung in Art einer "controlled release" eingesetzt werden. Die Bestandteile sind in der Mischung bevorzugt in folgenden Mengen enthalten.

Der Anteil des Amins der Komponente C in der erfindungsgemäßen Mischung beträgt, sofern enthalten, vorzugsweise 1 bis 50 Gew.-%, besonders bevorzugt 2 bis 40 Gew.-%, insbesondere 3 bis 35 Gew.-%. Sofern ein Lösungsmittel als Komponente D mitverwendet wird, beträgt der Anteil des Lösungsmittels an der Mischung vorzugsweise 10 bis 94 Gew.-%, besonders bevorzugt 20 bis 88 Gew.-%, insbesondere 30 bis 82 Gew.-%. Die Menge der optionalen Polymerkomponente E beträgt vorzugsweise 0 bis 70 Gew.-%, besonders bevorzugt 0 bis 50 Gew.-%, insbesondere 0 bis 25 Gew.-%. Bei Vorliegen der Komponente E beträgt die Menge vorzugsweise 0,5 bis 70 Gew.-%, besonders bevorzugt 1 bis 50 Gew.-%, insbesondere 2 bis 25 Gew.-%. Die Gesamtmenge der Komponenten A, B und gegebenenfalls C, D und E ergibt dabei 100 Gew.-%.

Die erfindungsgemäßen Mischungen können durch einfaches Vermischen der Komponenten A, B und gegebenenfalls C bis E hergestellt werden. Dabei kann das Vermischen auch bei erhöhter Temperatur von z. B. 30 bis 60°C durchgeführt werden. Die Reihenfolge der Zugabe der einzelnen Komponenten ist dabei beliebig. Bei Mitverwendung eines Lösungsmittels werden typischerweise zunächst die Komponenten A und B und gegebenenfalls C in dem Lösungsmittel gelöst, und anschließend wird das Polymer der Komponente E eingebracht. Sofern ein Erwärmen der Mischungen bei der Herstellung notwendig ist, wird vorzugsweise Komponente A zuletzt zugegeben.

Die erfindungsgemäßen, Mischungen werden als Additiv oder Beschichtungsmittel für harnstoffhaltige Stickstoffdüngemittel eingesetzt.

Als Additiv können sie dabei vor, nach oder gemeinsam mit einem harnstoffhaltigen Stickstoffdüngemittel ausgebracht werden. Dabei kann die erfindungsgemäße Mischung separat vom harnstoffhaltigen Stickstoffdüngemittel dosiert werden. Häufiger wird die erfindungsgemäße Mischung in das harnstoffhaltige Stickstoffdüngemittel eingebracht, beispielsweise in einer Schmelze, oder als Beschichtungsmittel auf das harnstoffhaltige Stickstoffdüngemittel aufgebracht. Bei der Mitverwendung als Additiv für harnstoffhaltige Stickstoffdüngemittel werden die erfindungsgemäßen Mischungen vorzugsweise in einer Menge von 0,001 bis 0,5 Gew.-%, bezogen auf das Gewicht des Harnstoffs im Stickstoffdüngemittel und auf Komponenten A und B in den Mischungen, eingesetzt.

Parallel zur Verbesserung der Stickstoff-Ausnutzung der harnstoffhaltigen, mineralischen und organischen Düngemittel wird durch die Verwendung dieser Mittel erreicht, dass es zu einer teilweisen erheblichen Steigerung der Erträge bzw. der Biomasseproduktion von Kulturpflanzen kommt.

Gleichermaßen können die erfindungsgemäßen Mischungen organischen Düngern, wie beispielsweise Gülle, bereits während der Lagerung zugesetzt werden, um auf diese Weise Stickstoff-Nährstoff-Verluste infolge einer gebremsten Umwandlung der einzelnen Stickstoffformen zu gasförmigen und somit flüchtigen Stickstoffverbindungen zu vermeiden und um dadurch gleichzeitig zur Senkung der Ammoniakbelastung in Tierställen beizutragen. Zudem können die erfindungsgemäßen Mischungen auf Ernteresten und beweideten Flächen zur Reduktion gasförmiger Stickstoffverluste und zur Verminderung von Nitratauswaschungen eingesetzt werden.

Die erfindungsgemäßen Mischungen können eine unerwartet hohe biologische Wirksamkeit aufweisen und zu außerordentlich hohen Ertragszuwachsraten führen.

Dabei ist es unerheblich, ob die erfindungsgemäßen Mittel in das Düngemittel eingearbeitet, z. B. eingeschmolzen, oder aber auf die Düngemitteloberfläche aufgetragen bzw. getrennt von der Düngemittelausbringung in Form eines beispielsweise (Suspensions)konzentrats, einer Lösung oder einer Formulierung appliziert werden.

Es ist erfindungsgemäß besonders bevorzugt, die erfindungsgemäßen Mischungen als Beschichtungsmittel für harnstoffhaltige Stickstoffdüngemittel zu verwenden.

Die Erfindung betrifft auch ein harnstoffhaltiges Düngemittel, enthaltend eine Mischung, wie sie vorstehend beschrieben ist, in einer solchen Menge, dass der Gesamtgehalt der Komponenten A und B, bezogen auf den enthaltenen Harnstoff, 0,02 bis 0,38 Gew.-% beträgt. Der Gehalt der Komponenten A und B, bezogen auf den enthaltenen Harnstoff, beträgt besonders bevorzugt 0,04 bis 0,27 Gew.-%, insbesondere 0,058 bis 0,24 Gew.-%. Dabei ist im harnstoffhaltigen Düngemittel die Mischung bevorzugt auf die Oberfläche des harnstoffhaltigen Düngemittels aufgebracht.

Unter einem harnstoffhaltigen Düngemittel ist zunächst einmal Harnstoff selber zu verstehen. Dieser hat in marktüblicher Düngemittelqualität eine Reinheit von mindestens 90 % und kann beispielsweise kristallin, granuliert, kompaktiert, geprillt oder gemahlen vorliegen. Daneben sollen auch Mischungen von Harnstoff mit einem oder mehreren weiteren Stickstoffdüngemitteln wie Ammoniumsulfat, Ammoniumnitrat, Ammoniumchlorid, Cyanamid, Dicyandiamid (DCD) oder Calciumnitrat sowie Langzeitdüngemitteln, beispielsweise Harnstoff-Formaldehyd-, Harnstoff-Acetaldehyd oder Harnstoff-Glyoxal-Kondensate umfasst sein. Weiterhin sind auch harnstoffhaltige Mehrnährstoffdünger umfasst, welche neben Stickstoff noch mindestens einen weiteren Nährstoff wie Phosphor, Kalium, Magnesium, Calcium oder Schwefel enthalten. Daneben können auch die Spurenelemente Bor, Eisen, Kupfer, Zink, Mangan oder Molybdän enthalten sein. Derartige harnstoffhaltige Mehrnährstoffdünger können ebenfalls granuliert, kompaktiert, geprillt, gemahlen oder als Kristallmischung vorliegen. Außerdem sind auch flüssige harnstoffhaltige Düngemittel umfasst, wie Ammoniumnitrat-Harnstofflösung oder auch Gülle, Jauche und Gärrest aus der Biogaserzeugung. Die harnstoffhaltigen Düngemittel können außerdem noch einen oder mehrere weitere Wirkstoffe wie beispielsweise Nitrifikationsinhibitoren, Herbizide, Fungizide, Insektizide, Wachstumsregulatoren, Hormone, Pheromone oder andere Pflanzenschutzmittel oder Bodenhilfsstoffe in Mengen von 0,01 bis 20 Gew.-% enthalten.

Die erfindungsgemäßen Düngemittel sind dadurch erhältlich, dass man die erfindungsgemäßen Mischungen entweder in flüssiger oder auch in fester Form mit dem harnstoffhaltigen Düngemittel vermischt oder in diese eingranuliert, einkompaktiert oder einprillt, indem sie einem entsprechenden Düngemittel-Gemisch bzw. einer Maische oder Schmelze zugegeben werden. Besonders bevorzugt werden die erfindungsgemäßen Mischungen oberflächig auf bereits fertige Granulate, Kompaktate oder Prills der harnstoffhaltigen Düngemittel aufgebracht, beispielsweise durch Aufsprühen, Aufpudern oder Imprägnieren. Dies kann auch unter Einsatz weiterer Hilfsstoffe wie Haftungsvermittlern oder Umhüllungsmaterialien erfolgen. Geeignete Apparate zur Durchführung dieser Aufbringung sind beispielsweise Teller, Trommeln, Mischer oder Wirbelbettapparate, die Aufbringung kann aber auch auf Förderbändern bzw. deren Abwurfstellen oder mittels pneumatischer Feststoffförderer erfolgen. Eine abschließende Behandlung mit Antibackmitteln und/oder Antistaubmitteln ist ebenfalls möglich. Die erfindungsgemäßen Düngemittel oder Mischungen werden bei der Düngung mit harnstoffhaltigen Düngemitteln verwendet. Bevorzugt erfolgt die Applikation auf einer landwirtschaftlich oder gärtnerisch genutzten Fläche.

Die Erfindung wird durch die nachfolgenden Beispiele näher erläutert.

### Beispiele

In den nachfolgenden Beispielen bedeuten

| | |
|---|---|
| NBPT | N-(n-Butyl)-thiophosphorsäuretriamid = Urease-Inhibitor UI |
| DMPBS | 2-(N-3,4-Dimethylpyrazol)bernsteinsäure = Nitrifikationsinhibitor NI |

### Beispiele

### A. Herstellungsbeispiele für 2-(N-3,4-Dimethylpyrazol)bernsteinsäure (DMPBS)

### Beispiel 1

9,6 g 3,4-Dimethylpyrazol (0,1 mol) und 9,8 Maleinsäureanhydrid (0,1 mol) wurden in 50 ml 50%iger Essigsäure auf 100 °C erhitzt. Nach 16 h wurde zur Trockene eingedampft. Beim Aufnehmen des Rückstands in Diethylether fällt das Produkt (2-(N-3,4-Dimethylpyrazol)bernsteinsäure) rein aus und wird abfiltriert: Weiße Kristalle in einer Ausbeute von 92 %. Im NMR-Spektrum sind mehrere Methylsignale erkennbar, was mit der Aufhebung der 3,5-Tautomerie durch die Substitution an Stickstoff im Einklang steht.

### Beispiel 2: Herstellung im 200 kg-Maßstab

Als Ausgangsmaterialien für die Versuche wurden Maleinsäureanhydrid der CVM mit einer Reinheit von über 99,5 % und eine 80 %ige wässrige Lösung von 3,4-Dimethylpyrazol (3,4-DMP) der BASF SE eingesetzt. Laut NMR-Spektrum enthielt die eingesetzte Lösung des 3,4-DMPs ca. 2 % nicht näher charakterisierter Verunreinigungen.

Die Versuche wurden zunächst in einem 20 L-Reaktionsgefäß durchgeführt, das in weiteren Versuchen durch ein 25 L-Reaktionsgefäß ersetzt wurde.

Im ersten Versuch wurden 41,608 mol Maleinsäureanhydrid vorgelegt und in 11 Litern destilliertem Wasser gelöst. Hierbei stieg die Temperatur um 10 °C an. Anschließend wurden 41,608 mol 80 %ige 3,4-Dimethylpyrazol-Lösung zugegeben, wobei die Temperatur um weitere 12 °C anstieg. Nach beendeter Zugabe wurde das Reaktionsgemisch auf 100 °C Innentemperatur erwärmt. Als diese Temperatur erreicht worden war, wurde das Reaktionsgemisch für 24 Stunden bei 100 °C gerührt und anschließend abkühlen gelassen. Nachdem das Reaktionsgemisch auf 90 °C abgekühlt war, wurde eine Probe für die NMR-spektroskopische Reaktionskontrolle entnommen und das Reaktionsgemisch anschließend mit 1 g Produkt (Kristalle von 2-(N-3,4-Dimethylpyrazol)bernstein-säure) angeimpft. Bei dieser Temperatur setzte noch keine Kristallisation ein, die zugegebenen Kristalle lösten sich aber auch nicht mehr auf. Beim weiteren Abkühlen setzte ab circa 85 °C langsam die Kristallisation ein. Die Kristallisation der Hauptmenge des Produktes setzte erst knapp unterhalb von 80 °C unter Temperaturerhöhung ein. Das Reaktionsgemisch wurde zur vollständigen Kristallisation über Nacht unter Rühren abkühlen gelassen. Der ausgefallene Feststoff wurden über drei 8 L-G3-Glasfilternutschen mittels Saugflasche und Membranpumpe im Vakuum abfiltriert, mit insgesamt 8 Litern destilliertem Wasser gewaschen und anschließend bei 60 °C Badtemperatur im Vakuum getrocknet. Das so erhaltene trockene Produkt wurde in einen Behälter gegeben, gut durchmischt und eine Probe hiervon NMRspektroskopisch untersucht. In den nachfolgenden Versuchen wurde anstelle des destillierten Wassers eine entsprechende Menge der vereinigten Filtrate als Reaktionsmedium eingesetzt. Die überschüssige Menge der vereinigten Filtrate wurde entsorgt.

Die NMR-spektroskopische Reaktionskontrolle nach 24 Stunden ergab einen relativ konstanten Umsatz von circa 92 % mit einem relativ konstanten Isomeren-Verhältnis P1/P2 (2-(3,4-Dimethyl-1H-pyrazol-1-yl)bernsteinsäure/2-(2,3-Dimethyl-1H-pyrazol-1-yl)bernsteinsäure) um 3,3. Nur zu Beginn des Reihenversuchs lag das Verhältnis geringfügig höher. Dies war jedoch auch zu erwarten, da mit dem Einsatz des Filtrates anstelle des destillierten Wassers als Reaktionsmedium eine größere Menge an P2 (Verhältnis P1/P2 liegt in den Filtraten bei circa 1,0) in die nachfolgenden Versuche eingetragen wurde.

Die Zusammensetzung des Reaktionsgemisches nach 24 Stunden Reaktionszeit erreichte schon nach wenigen Versuchen konstante Werte. Ebenso weicht die Zusammensetzung der isolierten Produkte der einzelnen Versuche nur geringfügig voneinander ab.

Die im Mittel mit einer Ausbeute von 90,22 % erhaltenen Feststoffe besaßen eine Reinheit von 99,9 % und im Mittel ein Isomerenverhältnis von 4,0 (2-(3,4-Dimethyl-1H-pyrazol-1-yl)bernsteinsäure zu 2-(2,3-Dimethyl-1H-pyrazol-1-yl)bernsteinsäure). Verunreinigungen an 3,4-DMP, Maleinsäure und rac-Äpfelsäure waren in den 1H-NMR-Spektren nicht oder nur in Spuren (< 0,1 %) nachweisbar.

### B. Anwendungsbeispiele

Es wurden Screening-Versuche durchgeführt, um die Wirkung von DMPSA und NBPT bei der Urease-Inhibierung und Nitrifikationsinhibierung zu evaluieren und geeignete Einsatzmengen aufzufinden. Hierzu diente ein zweifaktorielles Versuchsdesign einschließlich einer ungedüngten Kontrollprobe. Es wurden für den Urease-Inhibitor NBPT und für den Nitrifikationsinhibitor DMPSA jeweils 0 %, 33 %, 66 % und 100 % der für die Einzelverbindungen bei alleiniger Verwendung empfohlenen Aufwandmengen (in diesem Beispiel 0,6 g NBPT pro kg Harnstoff bzw. 3,6 g DMPSA pro kg Harnstoff) eingesetzt, so dass sich 16 Versuche ergaben (0 % - 0 % bis 100 % - 100 %), neben der ungedüngten Kontrollprobe.

Harnstoffdüngemittel wurde in einer Menge von 200 kg Stickstoff pro ha ausgebracht, entsprechend 0,51 mg Harnstoff-Stickstoff pro g Boden. Als Boden wurde Filderlehm mit einem pH-Wert von 6,8 eingesetzt. Die Inkubationsversuche wurden bei 20 °C durchgeführt. Bei der Untersuchung von Spurengasen wurde Zuluft zunächst durch eine Gasprobe, sodann durch eine 250 ml fassende Glasflasche mit 150 g Boden geführt, nachfolgend durch eine Gasprobe für die Abluft und durch eine Säurefalle, um beispielsweise Ammoniakgehalte zu bestimmen. Für die Stickstoffmessung wurden etwa 20 g Boden inkubiert, für die Harnstoffmessung etwa 5 g Boden.

Die Prozentangaben der Wirkstoffe beziehen sich auf die übliche Aufwandmenge, wenn nur eine der Komponenten (NI oder UI) eingesetzt wird.

### 1. Ergebnisse - Ammonium

% vom applizierten Harnstoff (13 mg N)

Es wurde eine Bestimmung 28 Tage nach Applikation des Harnstoffs durchgeführt, wobei die prozentuale Wiederfindung als Ammonium angegeben ist.

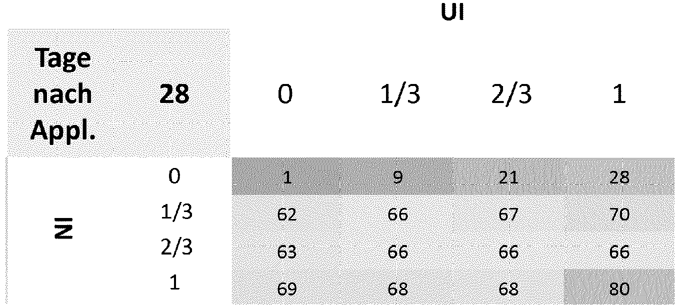

Aus den Ergebnissen geht hervor, dass 33 % DMPSA ausreichend sind, um die Nitrifikation während des gesamten Versuchs zu hemmen. NBPT hatte nach 28 Tagen keinen ergänzenden Einfluss.

### 2. Ergebnisse - Nitrat

% vom applizierten Harnstoff (13 mg N)

5 Tage nach Applikation:

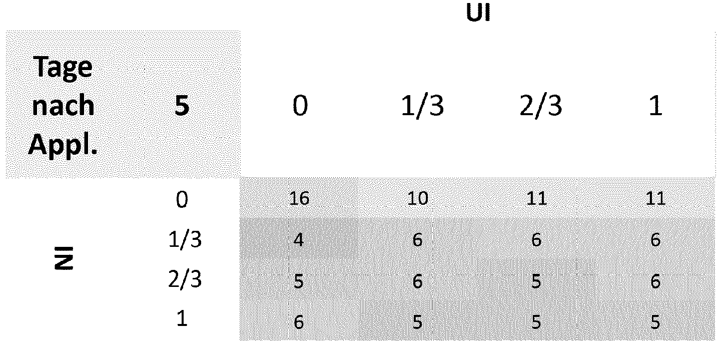

28 Tage nach Applikation:

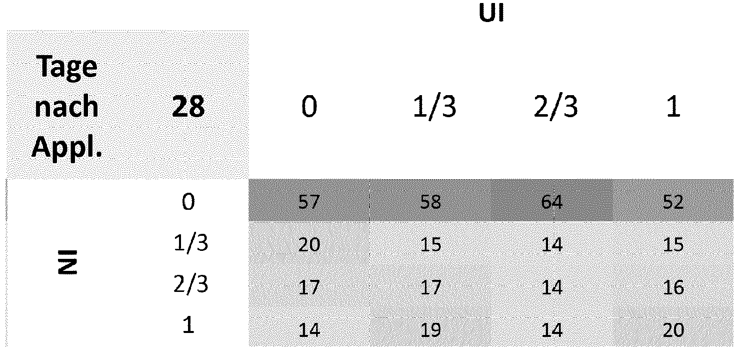

Aus den Ergebnissen geht hervor, dass 33 % des DMPSA ausreichend sind, um die Nitrifikation während des gesamten Zeitraums zu hemmen.

### 3. Ergebnisse - Ammoniakemission

% vom applizierten Harnstoff (77 mg N)

4 Tage nach Applikation:

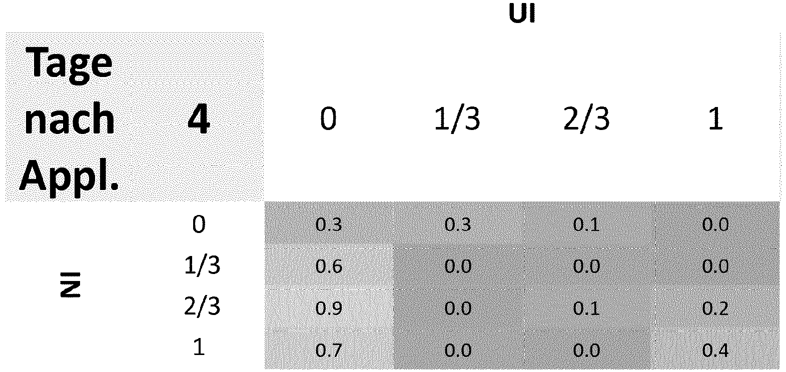

9 Tage nach Applikation:

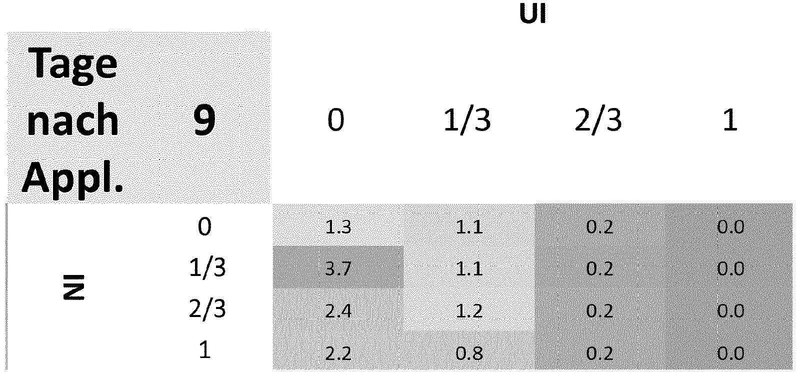

Aus den Ergebnissen geht hervor, dass mit steigendem Anteil an NBPT die Ammoniakverluste vermindert werden können. Bereits bei 66 % NBPT trat eine nennenswerte und fast vollständige Verminderung der Ammoniakemissionen auf, insbesondere 9 Tage nach Applikation.

Der Zusatz von DMPSA lässt die Ammoniakemissionen ansteigen.

Durch Zusatz von NBPT konnte der Anstieg der Ammoniakemission durch den Nitrifikationsinhibitor verhindert werden.

### 4. Ergebnisse - Lachgas

77 mg N appliziert

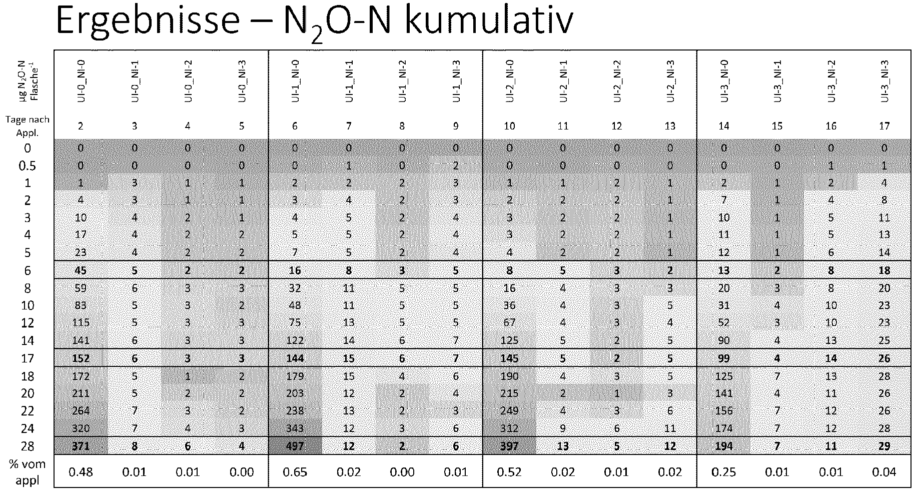

Aus den Ergebnissen geht hervor, dass bereits 33 % DMPSA die Lachgasemissionen drastisch senken.

Aus den Ergebnissen geht insgesamt hervor, dass die Kombination von 33 % der üblichen DMPSA-Menge mit 66 bis 100 % der üblichen NBPT-Menge zu einer optimalen Wirkung führt. Die Nitrifikation ist ausreichend gehemmt, Lachgasverluste und Ammoniakverluste sind stark reduziert und der Harnstoff wird länger stabilisiert.

## Patentansprüche

1. Mischung zur Behandlung von harnstoffhaltigen Düngemitteln, enthaltend
a) mindestens ein (Thio)phosphorsäuretriamid der allgemeinen Formel (I) und/oder (Thio)phosphorsäurediamid der allgemeinen Formel (II)
R¹R²N-P(X)(NH₂)₂ (I)
R¹O-P(X)(NH₂)₂ (II)
mit der Bedeutung
X Sauerstoff oder Schwefel,
R¹ und R² unabhängig voneinander Wasserstoff, jeweils substituiertes oder unsubstituiertes 2-Nitrophenyl, C₁₋₁₀-Alkyl, C₃₋₁₀-Cycloalkyl, C₃₋₁₀-Heterocycloalkyl, C₆₋₁₀-Aryl, C₆₋₁₀-Heteroaryl oder Diaminocarbonyl, wobei R¹ und R² zusammen mit dem sie verbindenden Stickstoffatom auch einen 5- oder 6-gliedrigen gesättigten oder ungesättigten heterocyclischen Rest bilden können, der gegebenenfalls auch ein oder zwei weitere Heteroatome, ausgewählt aus der Gruppe, bestehend aus Stickstoff, Sauerstoff und Schwefel, enthalten kann, als Komponente A,
b) 2-(N-3,4-Dimethylpyrazol)-bernsteinsäure, die auch als Salz vorliegen kann, als Komponente B,
wobei Komponenten A und B in einem Gewichtsverhältnis im Bereich von 1 : 1 bis 1 : 6 vorliegen.

2. Mischung nach Anspruch 1, **dadurch gekennzeichnet, dass** als (Thio)phosphorsäuretriamide der allgemeinen Formel (I) N-Alkylthiophosphorsäuretriamide mit den Bedeutungen X = S und R² = H und/oder N-Alkylphosphorsäuretriamide mit den Bedeutungen X = O und R² = H eingesetzt werden.

3. Mischung nach einem der Ansprüche 1 oder 2, **dadurch gekennzeichnet, dass** sie
c) mindestens eine, eine Aminogruppe oder eine substituierte Aminogruppe enthaltende Verbindung mit einem Siedepunkt von mehr als 100°C, ausgewählt aus Methyldiethanolamin, Tetrahydroxypropylethylendiämin, Trimethylaminoethylethanolamin, N,N,N',N'-Tetrarnethyl-1,6-hexandiamin, N,N',N"-Tris(dimethylaminopropyl)hexahydrotriazin, 2,2'-Dimorpholinyldiethylether oder Gemischen davon, als Komponente C in mindestens der 0,2-fachen molaren Menge der Komponente A enthält.

4. Mischung nach einem der Ansprüche 1 bis 3, weiterhin ein Lösungsmittel für die (Thio)phosphorsäuretriamide als Komponente D enthaltend und/oder weiterhin ein Polymer in gelöster oder dispergierter Form als Komponente E enthaltend.

5. Mischung nach einem der Ansprüche 1 bis 4, **dadurch gekennzeichnet, dass** Komponenten A und B in einem Gewichtsverhältnis im Bereich von 1 : 1,5 bis 1 : 5, insbesondere 1 : 2 bis 1 : 4,5 vorliegen.

6. Mischung nach einem der Ansprüche 1 bis 5, **dadurch gekennzeichnet, dass** als Komponente A N-(n-Butyl)-thiophosphorsäuretriamid eingesetzt wird.

7. Verwendung einer Mischung gemäß einem der Ansprüche 1 bis 6 als Additiv oder Beschichtungsmittel für harnstoffhaltige Stickstoffdüngemittel.

8. Verwendung nach Anspruch 7, **dadurch gekennzeichnet, dass** die Mischung in Form einer Formulierung, einer Lösung oder einer Dispersion getrennt oder gleichzeitig mit dem Düngemittel ausgebracht wird oder in das Düngemittel eingebracht oder auf das Düngemittel aufgebracht wird.

9. Verwendung einer Mischung gemäß einem der Ansprüche 1 bis 6 zur Verminderung der Stickstoffverluste bei organischen Düngern sowie auf Ernteresten und auf beweideten Flächen oder während der Güllelagerung und zur Absenkung der Ammoniaklast in Tierställen.

10. Harnstoffhaltiges Düngemittel, enthaltend eine Mischung gemäß einem der Ansprüche 1 bis 6 in einer solchen Menge, dass der Gesamtgehalt der Komponenten A und B, bezogen auf den enthaltenen Harnstoff, 0,02 bis 0,38 Gew.-% beträgt.

11. Harnstoffhaltiges Düngemittel nach Anspruch 10, **dadurch gekennzeichnet, dass** die Mischung auf die Oberfläche des harnstoffhaltigen Düngemittels aufgebracht ist.

12. Harnstoffhaltiges Düngemittel nach Anspruch 10 oder 11, **dadurch gekennzeichnet, dass** der Gesamtgehalt der Komponenten A und B, bezogen auf den enthaltenen Harnstoff, 0,04 bis 0,27 Gew.-% beträgt.

## Claims

1. Mixture for treatment of urea-containing fertilizers, comprising
a) at least one (thio)phosphoric triamide of the general formula (I) and/or (thio)phosphoric diamide of the general formula (II)
R¹R²N-P(X) (NH₂)₂ (I)
R¹O-P (X) (NH₂)₂ (II)
with the following definitions:
X is oxygen or sulfur,
R¹ and R² are independently hydrogen, in each case substituted or unsubstituted 2-nitrophenyl, C₁₋₁₀-alkyl, C₃₋₁₀-cycloalkyl, C₃₋₁₀-heterocycloalkyl, C₆₋₁₀-aryl, C₆₋₁₀-heteroaryl or diaminocarbonyl, where R¹ and R² together with the nitrogen atom that joins them may also form a 5- or 6-membered saturated or unsaturated heterocycle radical which may optionally also contain one or two further heteroatoms selected from the group consisting of nitrogen, oxygen and sulfur, as component A,
b) 2-(N-3,4-dimethylpyrazole)succinic acid which may also be in salt form as component B,
where components A and B are present in a weight ratio in the range from 1:1 to 1:6.

2. Mixture according to Claim 1, **characterized in that** the (thio)phosphoric triamides of the general formula (I) used are N-alkylthiophosphoric triamides with the definitions of X = S and R² = H and/or N-alkylphosphoric triamides with the definitions of X = O and R² = H.

3. Mixture according to either of Claims 1 and 2, **characterized in that** it comprises
c) at least one compound containing an amino group or a substituted amino group and having a boiling point of more than 100°C, selected from methyldiethanolamine, tetrahydroxypropyl-ethylenediamine, trimethylaminoethylethanol-amine, N,N,N',N'-tetramethylhexane-1,6-diamine, N,N',N''-tris(dimethylaminopropyl)hexahydrotriazine, 2,2'-dimorpholinyldiethyl ether or mixtures thereof, as component C in at least 0.2 times the molar amount of component A.

4. Mixture according to any of Claims 1 to 3, further comprising a solvent for the (thio)phosphoric triamides as component D and/or further comprising a polymer in dissolved or dispersed form as component E.

5. Mixture according to any of Claims 1 to 4, **characterized in that** components A and B are present in a weight ratio in the range from 1:1.5 to 1:5, especially 1:2 to 1:4.5.

6. Mixture according to any of Claims 1 to 5, **characterized in that** N-(n-butyl)thiophosphoric triamide is used as component A.

7. Use of a mixture according to any of Claims 1 to 6 as additive or coating composition for urea-containing nitrogen fertilizers.

8. Use according to Claim 7, **characterized in that** the mixture is deployed in the form of a formulation, a solution or a dispersion separately from or simultaneously with the fertilizer or is introduced into the fertilizer or applied to the fertilizer.

9. Use of a mixture according to any of Claims 1 to 6 for avoiding nitrogen losses in organic fertilizers and on harvest residues and on grazing areas or during storage of liquid manure and for lowering the ammonia load in animal stalls.

10. Urea-containing fertilizer comprising a mixture according to any of Claims 1 to 6 in such an amount that the total content of components A and B, based on the urea present, is 0.02% to 0.38% by weight.

11. Urea-containing fertilizer according to Claim 10, **characterized in that** the mixture has been applied to the surface of the urea-containing fertilizer.

12. Urea-containing fertilizer according to Claim 10 or 11, **characterized in that** the total content of components A and B, based on the urea present, is 0.04% to 0.27% by weight.

## Revendications

1. Mélange pour le traitement d'engrais contenant de l'urée, contenant :
a) au moins un triamide de l'acide (thio)phosphorique de formule générale (I) et/ou un diamide de l'acide (thio)phosphorique de formule générale (II)
R¹R²N-P(X) (NH₂)₂ (I)
R¹O-P(X) (NH₂)₂ (II)
avec les significations :
X oxygène ou soufre,
R¹ et R² indépendamment l'un de l'autre, hydrogène ; 2-nitrophényle, alkyle en C₁₋₁₀, cycloalkyle en C₃₋₁₀, hétérocycloalkyle en C₃₋₁₀, aryle en C₆₋₁₀, hétéroaryle en C₆₋₁₀ ou diaminocarbonyle, chacun substitués ou non substitués, R¹ et R² pouvant également former ensemble avec l'atome d'azote qui les relie un radical hétérocyclique saturé ou insaturé à 5 ou 6 chaînons, qui peut éventuellement également contenir un ou deux hétéroatomes supplémentaires choisis dans le groupe constitué par l'azote, l'oxygène et le soufre, en tant que composant A,
b) de l'acide 2-(N-3,4-diméthylpyrazole)-succinique, qui peut également se présenter sous la forme d'un sel, en tant que composant B,
les composants A et B étant présents en un rapport en poids dans la plage allant de 1:1 à 1:6.

2. Mélange selon la revendication 1, **caractérisé en ce que** des triamides de l'acide N-alkylthiophosphorique avec les significations X = S et R² = H et/ou des triamides de l'acide N-alkylphosphorique avec les significations X = 0 et R² = H sont utilisés en tant que triamides de l'acide (thio)phosphorique de formule générale (I).

3. Mélange selon l'une quelconque des revendications 1 ou 2, **caractérisé en ce qu'**il contient :
c) au moins un composé contenant un groupe amino ou un groupe amino substitué ayant un point d'ébullition supérieur à 100 °C, choisi parmi la méthyldiéthanolamine, la tétrahydroxypropyléthylène-diamine, la triméthylaminoéthyléthanolamine, la N,N,N",N"-tétraméthyl-1,6-hexane-diamine, la N,N',N''-tris(diméthylaminopropyl)hexahydrotriazine, l'éther de 2,2'-dimorpholinyl-diéthyle ou leurs mélanges, en tant que composant C en au moins 0,2 fois la quantité molaire du composant A.

4. Mélange selon l'une quelconque des revendications 1 à 3, contenant en outre un solvant pour les triamides de l'acide (thio)phosphorique en tant que composant D et/ou contenant en outre un polymère sous forme dissoute ou dispersée en tant que composant E.

5. Mélange selon l'une quelconque des revendications 1 à 4, **caractérisé en ce que** les composants A et B sont présents en un rapport en poids dans la plage allant de 1:1,5 à 1:5, notamment de 1:2 à 1:4,5.

6. Mélange selon l'une quelconque des revendications 1 à 5, **caractérisé en ce que** le triamide de l'acide N-(n-butyl)-thiophosphorique est utilisé en tant que composant A.

7. Utilisation d'un mélange selon l'une quelconque des revendications 1 à 6 en tant qu'additif ou agent de revêtement pour des engrais azotés contenant de l'urée.

8. Utilisation selon la revendication 7, **caractérisée en ce que** le mélange est épandu sous la forme d'une formulation, d'une solution ou d'une dispersée séparément ou simultanément avec l'engrais ou introduit dans l'engrais ou appliqué sur l'engrais.

9. Utilisation d'un mélange selon l'une quelconque des revendications 1 à 6 pour réduire les pertes d'azote dans des engrais organiques, ainsi que sur des résidus de récoltes et sur des pâturages ou pendant le stockage de fumier et pour réduire la charge en ammoniac dans des étables.

10. Engrais contenant de l'urée, contenant un mélange selon l'une quelconque des revendications 1 à 6 en une quantité telle que la teneur totale en composants A et B, par rapport à l'urée contenue, est de 0,02 à 0,38 % en poids.

11. Engrais contenant de l'urée selon la revendication 10, **caractérisé en ce que** le mélange est appliqué sur la surface de l'engrais contenant de l'urée.

12. Engrais contenant de l'urée selon la revendication 10 ou 11, **caractérisé en ce que** la teneur totale en composants A et B, par rapport à l'urée contenue, est de 0,04 à 0,27 % en poids.
